Europäisches Patentamt

European Patent Office

Office européen des brevets

(19)

(11) **EP 0 700 516 B1**

(12) **FASCICULE DE BREVET EUROPEEN**

(45) Date de publication et mention
de la délivrance du brevet:
**08.01.1997 Bulletin 1997/02**

(21) Numéro de dépôt: **94916291.1**

(22) Date de dépôt: **16.05.1994**

(51) Int Cl.$^6$: **G01N 23/08**, **A61B 6/00**

(86) Numéro de dépôt international:
**PCT/FR94/00581**

(87) Numéro de publication internationale:
**WO 94/28398 (08.12.1994 Gazette 1994/27)**

(54) **PROCEDE ET DISPOSITIF POUR DETERMINER LA FONCTION D'ATTENUATION D'UN OBJET PAR RAPPORT A LA TRANSMISSION D'UNE EPAISSEUR D'UN MATERIAU DE REFERENCE**

**VERFAHREN UND GERÄT ZUR BESTIMMUNG DER ABSCHWAECHUNGSFUNKTION EINES OBJEKTES IN VERHÄLTNIS ZUR TRANSMISSION EINER REFERENZMATERIALDICKE**

**METHOD AND DEVICE FOR DETERMINING THE ATTENUATION FUNCTION OF AN OBJECT WITH RESPECT TO THE TRANSMISSION OF A REFERENCE MATERIAL THICKNESS**

(84) Etats contractants désignés:
**AT BE CH DE DK ES FR GB GR IE IT LI LU MC NL PT SE**

(30) Priorité: **28.05.1993 FR 9306449**

(43) Date de publication de la demande:
**13.03.1996 Bulletin 1996/11**

(73) Titulaire: **EUROP SCAN, S.A.**
**94533 Rungis Cédex (FR)**

(72) Inventeurs:
• **MAITREJEAN, Serge**
**F-75013 Paris (FR)**

• **PERION, Didier**
**F-75013 Paris (FR)**

(74) Mandataire: **Serin, Jean-Pierre**
**Cabinet Loyer,**
**78, avenue Raymond Poincaré**
**75116 Paris (FR)**

(56) Documents cités:
**EP-A- 0 334 762**       **EP-A- 0 402 244**
**WO-A-92/02892**         **AT-B- 394 654**
**GB-A- 2 004 437**       **US-A- 4 400 827**

## Description

La présente invention concerne un procédé pour déterminer la fonction d'atténuation d'un objet et un dispositif pour la mise en oeuvre du procédé. Elle s'applique notamment mais pas uniquement à la radioscopie. D'une manière générale, elle s'applique au domaine de la spectroscopie dans la gamme d'énergie allant de quelques keV à quelques MeV.

Le document EP-A-0 402 244 décrit un procédé d'étalonnage d'un système radiologique et de mesure de l'épaisseur équivalente d'un objet, sans prendre en compte une épaisseur de référence ou déterminer des coefficients de développement.

Le document GB-A-2 004 437 décrit un appareil de tomographie muni d'un ordinateur permettant d'obtenir une image de la distribution de la densité d'un matériau.

Le document EP-A-0 334 762 décrit un procédé et un système d'étalonnage d'un scanner à rayons X en utilisant un seul étalon non circulaire dans lesquels on effectue des mesures d'atténuation pour plusieurs postions angulaires principales du scanner autour de l'étalon. On obtient une courbe d'atténuation lissée par filtrage et par approximation polynomiale.

De façon usuelle, on ne détermine pas la fonction d'atténuation d'un objet mais uniquement des valeurs de cette fonction pour des énergies données. La fonction d'atténuation peut être ensuite reconstituée par interpolation d'une courbe passant par ces points. On utilise le plus souvent des faisceaux monochromatiques de rayons X ou $\gamma$ d'énergie stable et déterminée, provenant de sources isotopiques dont l'énergie est éventuellement diminuée par effet Compton ou issus de tubes à rayons X à spectre large filtré par un réseau de Bragg pour obtenir un spectre de raies.

L'objet à caractériser est placé sur le parcours du faisceau et un détecteur mesure, pour les différentes énergies, l'intensité du faisceau transmis. Si l'on pose que $I_o(E)$ représente l'intensité du faisceau incident d'énergie E, que $I_t(E)$ représente l'intensité du faisceau transmis après traversée de l'objet, alors la transmission Tr(E) pour l'énergie E est égale au rapport $I_t(E)/I_o(E)$. L'atténuation considérée pour l'énergie E, Att (E), est égale à $-\text{Log } T_r(E)$.

Ces techniques connues présentent de nombreux inconvénients. Les atténuations ne sont déterminées que pour un faible nombre d'énergies. En conséquence, si l'on veut déterminer la fonction atténuation, il faut ajuster une courbe passant par ces points ce qui rend la précision dépendante de la manière dont est réalisée l'interpolation.

De plus, la détermination des valeurs de l'atténuation par ces techniques est lente si l'on désire obtenir une précision de l'ordre de 1%. En effet, il est nécessaire de moyenner un grand nombre de mesures et un temps de l'ordre d'une seconde est nécessaire pour déterminer une valeur de l'atténuation.

Ce dernier point interdit l'utilisation de ces techniques pour la réalisation d'images, et plus encore la réalisation d'images en temps quasi-réel, impérative dans les applications touchant à l'inspection des bagages et la sécurité.

Une image comprend environ 500 points par ligne et environ 600 lignes; si chaque mesure nécessite une seconde, la réalisation d'une image, pour une énergie unique, demande environ 83h, à multiplier par le nombre voulu d'énergies.

D'autre part, la diffraction de Bragg et l'effet Compton sont dépendants de l'angle d'incidence du faisceau et ne permettent d'obtenir un faisceau à l'énergie désirée que pour un angle d'incidence donné obtenu avec un faisceau parallèle. Avec ce type de faisceau collimaté, il n'est possible de faire la mesure de la transmission qu'en un point de l'objet . Pour obtenir simultanément un grand nombre de points de mesure, il faut multiplier les moyens d'émission de faisceau, car étant donnée la dépendance angulaire, l'utilisation d'un faisceau en éventail est interdite. On comprend que la mise en oeuvre d'un tel montage est très complexe et coûteuse.

L'utilisation de sources isotopiques est plus simple mais ces sources présentent aussi des inconvénients. En effet, pour des raisons de sécurité, la manipulation des sources est sévèrement réglementée et l'intensité des faisceaux est faible.

Donc, les techniques connues de mesure d'atténuation ne permettent des évaluations que pour des énergies particulières dépendant fortement du dispositif utilisé et non de la volonté ou des besoins de l'utilisateur. D'autre part, elles nécessitent un temps de mesure très long, sont coûteuses et délicates à mettre en oeuvre; par conséquent, ces techniques sont difficilement utilisables en radioscopie, ou en imagerie de sécurité qui sont des domaines importants d'application de la détermination de l'atténuation d'un objet.

La présente invention pallie ces inconvénients. Elle permet de déterminer la fonction d'atténuation de manière très rapide (en un temps de l'ordre de la dizaine de millisecondes) en utilisant des tubes à rayons X ou des générateurs de rayons $\gamma$ standards. La fonction d'atténuation est déterminée en fonction d'une variable en relation bijective avec l'énergie. Comme on va le voir plus loin, la transmission u d'une épaisseur de référence d'un matériau de référence est choisie comme variable. Si l'on désire exprimer l'atténuation de l'objet en fonction de l'énergie, il suffit de mesurer une fois pour toute (et non à chaque détermination) la transmission u pour les énergies souhaitées, ceci à l'aide des techniques de l'art antérieur.

De manière plus précise, l'invention concerne un procédé pour déterminer la fonction d'atténuation d'un objet, comprenant les étapes suivantes:

A) Exprimer la fonction de transmission de l'objet comme un développement fini en puissances de la transmission u d'une épaisseur de référence d'un matériau de référence, chaque puissance de u étant affectée d'un coefficient, les puissances du développement étant égales à un rapport entre des épaisseurs préalablement déterminées du matériau de référence et l'épaisseur de référence;

B) Déterminer les coefficients du développement:

a) en mesurant l'intensité d'un faisceau de mesure pour différents spectres en énergie,
b) pour chacun desdits spectres en énergie, en mesurant l'intensité du faisceau transmise par chacune des épaisseurs considérées de matériau de référence,
c) pour chacun desdits spectres en énergie, en mesurant l'intensité du faisceau transmis par l'objet,
d) pour chacun desdits spectres, en décomposant l'intensité du faisceau transmis par l'objet en une somme des intensités mesurées à l'étape B-b) relatives au spectre considéré, ces intensités étant affectées des coefficients recherchés;
e) en résolvant le système d'équations obtenu à l'étape B-d);

C) Déduire des étapes A et B, la fonction d'atténuation de l'objet exprimée en fonction de u.

Lesdits spectres en énergie sont contenus dans une gamme allant de 10 à 500 keV correspondant à la gamme des rayons X ou lesdits spectres en énergie sont contenus dans une gamme allant de 0,5 MeV à 20 MeV correspondant à la gamme des rayons γ. Avantageusement, lesdits spectres en énergie sont tels que les spectres successifs se recouvrent partiellement.

Pour permettre la détermination de la fonction d'atténuation, le nombre d'épaisseurs de matériau de référence doit être inférieur ou égal au nombre de spectres en énergie; par exemple, N+1, N entier ≥ 2, spectres en énergie sont utilisés, et N épaisseurs de matériau de référence sont soumises à ces spectres.
Par exemple, N peut être égal à 9.

De manière avantageuse, les puissances du développement augmentées de 1/2 forment une suite géométrique de raison égale à une racine de trois, la première puissance du dévelopment étant égale à zéro.
Dans la succession des épaisseurs du matériau de référence, l'ordre de l'épaisseur de référence détermine le choix de la racine de trois. C'est ainsi que si l'épaisseur de référence est choisie comme la troisième épaisseur dans la succession des épaisseurs du matériau de référence, la raison de la suite sera la racine cubique de trois. De cette manière, zéro et un font partie de la suite. Zéro correspond à la puissance de u pour une transmission libre, sans matériau de référence dans le trajet du faisceau incident. Un correspond à la puissance de u pour la transmission à travers l'épaisseur de référence. Pour la gamme 10 - 500 KeV, de préférence, le matériau de référence est choisi parmi les corps ayant un numéro atomique effectif, Z effectif, compris entre 5 et 26. De cette manière, le matériau de référence est choisi avec un Z effectif moyen situé entre les matériaux légers et les matériaux lourds.
Pour cette gamme d'énergies comprise entre 10 et 500keV, le matériau de référence peut être du duralumin.
L'épaisseur de référence est alors comprise entre 1 et 5mm.
Avantageusement, l'épaisseur de référence est sensiblement égale à 4 mm.
Si l'on considère la gamme d'énergies comprise entre 0,5 et 20 MeV, le matériau de référence est choisi parmi les corps ayant un numéro atomique effectif, Z effectif, compris entre 13 et 60.
Dans cette gamme, le matériau de référence est avantageusement de l'acier.
Pour cette gamme, l'épaisseur de référence peut être comprise entre 0,5 et 2cm; avantageusement, l'épaisseur de référence est prise égale à 1cm.
Pour obtenir une évaluation de la fonction d'atténuation en fonction de l'énergie, les étapes supplémentaires suivantes sont nécessaires:

- A l'aide de faisceaux quasi monochromatiques d'énergie et d'intensité connues, mesurer u en fonction de l'énergie,
- En déduire les valeurs de la fonction d'atténuation de l'objet pour ces énergies.

La présente invention présente aussi un dispositif pour la mise en oeuvre du procédé comprenant:

- des moyens pour émettre un faisceau de mesure possédant successivement N+1, N entier ≥ 2, spectres en énergie différents,
- N échantillons en un matériau de référence et possédant des épaisseurs différentes, une de ces épaisseurs étant choisie comme épaisseur de référence, ces échantillons étant aptes à être placés à volonté sur le parcours du faisceau,
- au moins un détecteur apte à la mesure de l'intensité du faisceau pour chaque spectre en énergie ainsi qu'à la mesure de l'intensité du faisceau transmis par les échantillons et l'objet, soumis au faisceau de mesure,
- pour chaque détecteur, des moyens de traitement aptes à calculer, à partir de la mesure de l'intensité du faisceau ainsi que de la mesure de l'intensité du faisceau transmis par les échantillons et l'objet, la fonction de transmission de l'objet et à en déduire la fonction atténuation exprimée en fonction de la transmission de l'épaisseur de référence du matériau de référence.

Selon une variante, le dispositif pour la mise en oeuvre du procédé comprend:

- des moyens pour émettre un faisceau de mesure à spectre large,
- N, N étant un entier ≥ 2, échantillons en un matériau de référence et possédant des épaisseurs différentes, une de ces épaisseurs étant choisie comme épaisseur de référence,
- au moins un empilement de détecteurs, chaque détecteur étant sensible à une partie du spectre en énergie, l'empilement étant ordonné du détecteur sensible à la partie du spectre d'énergie la plus faible au détecteur sensible à la partie du spectre d'énergie la plus haute,
- pour chaque empilement, connectés en sortie des détecteurs de l'empilement considéré, des moyens de traitement aptes à calculer, à partir de la mesure de l'intensité des différents spectres du faisceau de mesure, de la mesure de l'intensité des spectres correspondant au faisceau de mesure transmis par les échantillons et l'objet, la fonction de transmission de l'objet et en déduire la fonction d'atténuation de l'objet exprimée en fonction de la transmission de l'épaisseur de référence du matériel de référence.

L'invention et ses avantages seront mieux compris à la lecture de la description qui suit, donnée à titre illustratif et non limitatif et faisant référence aux dessins annexés dans lesquels:

La figure 1 représente schématiquement un dispositif pour la mise en oeuvre du procédé conforme à l'invention;
La figure 2 représente schématiquement une suite de spectres en énergie utilisée pour mesurer des transmissions;
La figure 3 représente schématiquement une coupe longitudinale d'une pièce en forme de marches;
La figure 4 représente schématiquement une variante de réalisation d'un dispositif pour la mise en oeuvre du procédé conforme à l'invention.

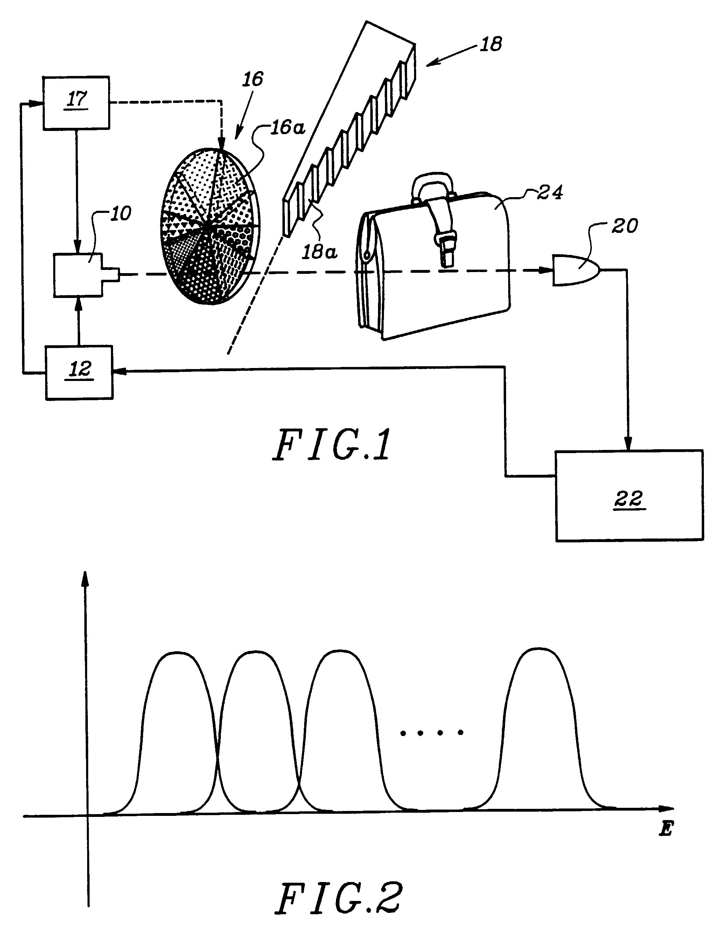

En référence à la figure 1, on décrit maintenant un premier dispositif pour la mise en oeuvre du procédé de l'invention. Ce dispositif comprend un générateur 10 de rayons X (gamme d'énergie allant de 10 à 500 keV) ou de rayons γ (gamme d'énergie allant de 0,5 à 20 Mev) selon la gamme d'énergie souhaitée. Dans cet exemple de réalisation, sous l'effet de la commande 12 à potentiel variable, le générateur 10 délivre un faisceau 14 dont l'énergie maximum est variable.

Un système 16 permet de faire défiler différents filtres 16a, en synchronisme avec la variation d'énergie du faisceau. Dans l'exemple de la figure 1, le système à filtres comprend un disque dont les portions correspondent chacune à un filtre différent. Les filtres sont du type passe-haut et sont connus en eux mêmes. La rotation du disque est entraînée par un système de commande 17 connectée à la commande 12 pour régler la synchronisation.

D'autre systèmes à filtres peuvent être utilisés de manière équivalente; par exemple, les filtres, disposés successivement, peuvent défiler dans le parcours du faisceau sous l'effet d'une translation.

Sur la figure 2, on a représenté la suite des spectres obtenus successivement lors de la rotation du disque en fonction de l'énergie du faisceau. Les filtres sont choisis de manières à obtenir un chevauchement des spectres successifs.

Dans le spectre en énergie du faisceau 14 délivré par le générateur 10, chaque filtre supprime toutes les énergies inférieures à un seuil caractéristique du filtre. Pour chaque spectre de la figure 2, la partie des hautes énergies correspond à l'énergie maximale délivrée par le générateur 10 lorsque le filtre associé est placé dans le parcours du faisceau.

Dans la pratique, les spectres en énergie ne sont pas caractérisés de manière précise, et leur allure exacte est sans incidence sur la mesure. Par contre, il est important que l'allure et l'intensité de chaque spectre ne varient pas entre le moment où l'on effectue les mesures de référence et les mesures sur l'objet à caractériser.

Par ailleurs, les faibles discontinuités dans la succession des spectres sont, elles aussi, sans incidence sur les mesures. Toutefois, pour ne pas perturber les mesures, ces discontinuités doivent être inférieures à 5 keV pour la plage allant de 20 à 40 keV et inférieures à 10 kev au delà.

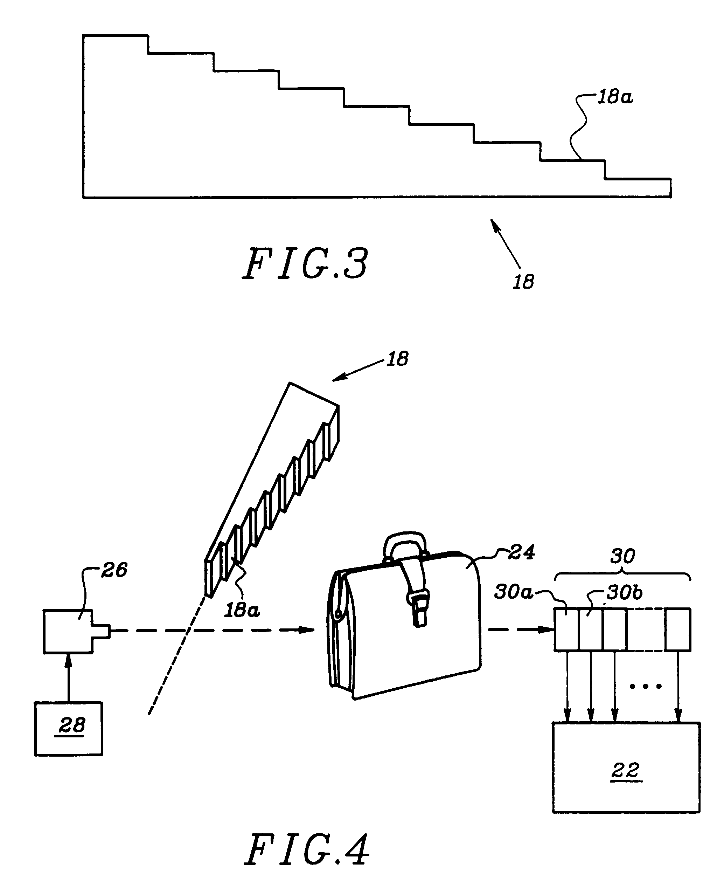

De retour à la figure 1, on voit que le dispositif comprend une pièce 18 en forme de marches d'escalier. Chaque marche correspond à un échantillon de matériau d'épaisseur différente. Un exemple de pièce 18 est représenté schématiquement en coupe longitudinale sur la figure 3.

Cette pièce 18 est réalisée dans un matériau de référence dont le Z effectif peut être compris entre 5 et 26 pour un faisceau incident de rayons X. On choisit par exemple le Duralumin (mélange composé de 95% Al, 4,5% Cu, et 0,5%Mn) dont le Z effectif est environ égal à 13,5.

Pour un faisceau incident de rayons γ, le matériau de référence est chosi parmi les matériaux ayant un Z effectif compris entre 13 et 60. On choisit par exemple l'acier dont le Z effectif est égal à 26.
On choisit la première marche comme étant la marche de moindre épaisseur, l'épaisseur des marches suivantes va croissant.

Dans cette réalisation, l'épaisseur de la seconde marche 18a est choisie comme épaisseur de référence. Bien entendu, toute autre marche pourrait être choisie comme marche de référence.
L'épaisseur de référence pour le Duralumin peut être choisie dans la gamme allant de 1 à 5 mm, par exemple 4mm.

L'épaisseur de référence pour l'acier peut être choisie dans la gamme allant de 0,5 à 2cm, par exemple 1cm.

Une épaisseur de référence trop faible défavorise la sensibilité aux hautes énergies; une épaisseur de référence trop importante défavorise la sensibilité aux basses énergies.

D'une manière générale, un nombre N d'épaisseurs distinctes de matériau de référence et donc de marches de la pièce 18, est nécessaire lorsque N+1 spectres sont utilisés. La pièce 18 représentée sur la figure 3 comprend neuf marches et est donc adaptée à un dispositif utilisant dix spectres en énergie.

A nouveau en référence à la figure 1, on voit que la pièce 18 peut être placée à volonté sur le parcours du faisceau grâce à un mouvement de translation. Pour des raisons de clarté de représentation, le dispositif permettant la translation de la pièce 18 n'est pas représenté sur la figure 1.

Par ailleurs, la pièce 18 peut prendre d'autres formes, équivalentes à celle de la pièce représentée. Par exemple, la pièce 18 peut prendre la forme d'un disque dont les portions possèdent les différentes épaisseurs souhaitées et dont une portion est évidée pour laisser libre le trajet du faisceau.

Sur la figure 1, on voit que le dispositif comprend un détecteur 20 délivrant un signal électrique proportionnel à l'intensité du faisceau atteignant le détecteur 20.

Le détecteur 20 est relié à un système de commande et de traitement 22. Le système 22 peut être un ordinateur, par exemple. Le système 22 gère les variations de la commande de potentiel variable 12.

On décrit maintenant le procédé conforme à l'invention, pour déterminer la fonction d'atténuation d'un objet. Lors d'une étape préliminaire, on effectue des mesures de calibration. Ces mesures de calibration consistent à mesurer l'intensité transmise par les différentes épaisseurs du matériau de référence soumises au faisceau de mesure.

Dans un premier temps, on mesure cette intensité transmise pour une épaisseur nulle, c'est à dire sans que la pièce 18 soit interposée dans le trajet du faisceau. Le système 22 commande la variation du potentiel variable et le filtrage adéquat du faisceau par le système 16 à filtres. Sous l'effet conjugué de la variation de potentiel et du filtrage adéquat, le faisceau de mesure 14 présente successivement N+1 spectres en énergie différents. N+1 peut être par exemple égal à 10.

A chaque valeur d'énergie maximum du faisceau correspond un filtre du système 16 pour obtenir successivement les différents spectres en énergie. Chaque variation de l'énergie maximum est synchronisée avec le positionnement d'un nouveau filtre. Le détecteur 20 mesure l'intensité intégrée du faisceau de mesure pour chacun des spectres et ces mesures sont mises en mémoire par le système de traitement 22.

On refait ensuite ces mêmes mesures mais en plaçant successivement sur le trajet du faisceau les différentes épaisseurs du matériau de référence grâce à une translation de la pièce 18. Une fois ces mesures mises en mémoire par le système 22, la pièce 18 est retirée du trajet du faisceau.

La calibration du dispositif est donc très rapide. Lors d'une utilisation continue du dispositif, elle peut être renouvelée plusieurs fois par jour, car si l'allure exacte de chacun des spectres est sans importance pour les précisions de la mesure (puisque les mesures sont intégrées en énergie), il est par contre important que d'une mesure à l'autre, l'allure et l'intensité des spectres soient identiques.

L'objet 24 à caractériser est ensuite placé sur le trajet du faisceau. L'objet 24 est soumis successivement à chacun des spectres en énergie réalisés par la variation de l'énergie maximum de faisceau synchronisée avec l'interposition du filtre adéquat. Pour chaque spectre en énergie, l'intensité transmise après traversée de l'objet 24 est mesurée par le détecteur 20 puis mise en mémoire.

Grâce à ces mesures, le système 22 déduit une formule analytique de l'atténuation de l'objet au point traversé par le faisceau, cette atténuation étant exprimée en fonction d'un paramètre u qui est la transmission d'une épaisseur donnée d'un matériau de référence.

Seul le cas des rayons X, avec un matériau de référence en Duralumin sera envisagé dans la suite de la description. On comprend que la transposition au cas des rayons $\gamma$ et de l'acier est immédiat. Pour épaisseur de référence, on choisit l'épaisseur de la seconde marche de la pièce 18.

u est donc égale à:

$$u = e^{- att(E) \, . \, 2,7 \, . \, 0,4}$$

où att(E) est l'atténuation massique;
2,7 correspond à la densité du Duralumin exprimée en g/cm$^3$.
0,4 correspond à l'épaisseur de référence choisie égale à 4mm et exprimée en cm.

Conformément à l'invention, le système 22 met en oeuvre le procédé suivant.

Si on définit l'indice j comme étant le numéro du spectre auquel est soumis l'objet, j=1 correspondant au spectre d'énergie la plus basse (le spectre le plus à gauche sur la figure 2), alors l'intensité $D_j$ transmise par l'objet s'exprime comme suit:

$$D_j = \int I_j(E) T_r(E) \, dE \qquad (0)$$

ou

$$D_j = \int I_j(E) \, e^{-att(E)} \, dE \qquad (1)$$

où $I_j(E)$ est l'intensité du j$^{ème}$ spectre en énergie, fonction de l'énergie E, $T_r(E)$ et att(E) sont respectivement la fonction de transmission et d'atténuation exprimées ici en fonction de E.

En effectuant le changement de variable, faisant apparaître le paramètre u, associé à l'épaisseur de référence ep (en cm) du matériau choisi de densité ρ (en g/cm3)

$$u = e^{-att(E)}, ep \cdot \rho$$

$D_j$ s'écrit :

$$D_j = \int I'_j (u) \, e^{-att,(u)} \, du \qquad (2)$$

où $I'_j$ (u) est l'intensité du $j^{ème}$ spectre exprimée en fonction de u et att' (u) est la fonction d'atténuation recherchée.

La fonction de transmission de l'objet est exprimée en fonction du paramètre u . Dans une première étape, le système 22 réalise ce changement de variable puis il fait l'approximation suivante: la fonction de transmission de l'objet est exprimée comme un développement polynomial fini en puissances du paramètre u; soit:

$$e^{-att'(u)} \sim \sum_{i=0}^{N} a_i \, u^{f(i)} \qquad (3)$$

I set un indice qui varie de 0 à N.

Cette approximation s'est revélée en pratique très précise puisque l'erreur introduite n'excède pas $10^{-4}$ en valeur relative.

Le nombre de termes du développement (N+1) est inférieur ou égal au nombre de spectres en énergies différentes utilisé pour les mesures de transmission, il est par conséquent inférieur ou égal au nombre N d'épaisseurs de matériau de référence utilisées pour la calibration plus un. De ce fait, chaque indice i correspond à un numéro de marche de la pièce 18, l'indice i = 0 correspondant à une épaisseur nulle c'est à dire que la pièce n'est pas dans le trajet du faisceau.

On comprend donc que, pour une même gamme d'énergie, par exemple la gamme allant de 10 keV à 150 keV pour des rayons X, plus le nombre de spectres réalisés sera élevé, meilleure sera l'interpolation. On peut montrer que l'utilisation d'une dizaine de spectres pour une plage d'énergie de 140 keV permet d'obtenir la fonction d'atténuation sur cette plage avec une précision de $10^{-4}$.

Pour chaque valeur de i, f (i), puissance du développement, représente un rapport entre une des épaisseurs du matériau de référence et l'épaisseur de référence. De manière avantageuse, ces rapports sont tels que les puissances f (i) augmentées de 1/2 forment une suite géométrique de raison égale une racine de trois.

Sous forme d'expression mathématique, ce choix peut s'écrire:

$$f(i) + 1/2 = a^i (f(o) + 1/2) ;$$

De plus, on choisit f (o) = o , puisque i = o corresponde au trajet libre du faisceau et donc à une épaisseur nulle:

$$f(i) = (a^i - 1)/2.$$

De cette manière, si la seconde marche est choisie comme épaisseur de référence, on a:
f (2) = 1 et par conséquent
a = $\sqrt{3}$

Si la seconde marche 18a est choisie comme marche de référence, la raison de la suite est égale à racine carrée de trois.

On peut montrer que ce choix pour les valeurs des puissances du développement et donc pour les épaisseurs des marches permet d'obtenir un développement stable.

En réalité, à cause des inévitables imprécisions d'usinage, les f (i) ne prennent pas exactement les valeurs calculées. Mais ces faibles écarts sont sans conséquence sur la validité du résultat.

On montre que l'intensité transmise par l'objet pour le spectre j peut se décomposer comme suit :

$$D_j = \sum_{i=0}^{N} a_i \, C_{ji} \qquad (4)$$

somme dans laquelle les termes Cji correspondent pour chaque spectre j à l'intensité transmise par les différentes épaisseurs de matériau de référence, i = 0 correspondant à l'épaisseur nulle (la pièce 18 étant hors du trajet du faisceau).

Dans l'égalité (4) , les Dj et les $C_{ji}$ sont connus par leur mesure, seuls les coefficients $a_i$ sont inconnus. Le nombre d'épaisseurs de matériau de référence (en comptant en plus l'épaisseur nulle) peut être choisi inférieur ou égal au nombre de spectres pour que l'on puisse déterminer les coefficients $a_i$. Dans l'exemple décrit ici, on réalise dix spectres différents en énergie, la pièce 18 comporte neuf marches auxquelles il faut adjoindre les mesures supplémentaires effctuées lorsque la pièce 18 est hors du trajet du faisceau.

Par conséquent, lors d'une étape suivante, à l'aide des valeurs mises en mémoire lors de la calibration et des mesures de transmission de l'objet, le système 22 détermine les $a_i$ . Ceci peut être réalisé par toute méthode connue par exemple par la méthode des moindres carrés.

L'atténuation Att est définie comme:

Att = -LogTr où Tr est la transmission.

Une fois, les coefficients $a_i$ déterminés, le système 22 les remplace par leurs valeurs dans l'équation (3), en prend le logarithme népérien et multiplie par (-1). De cette manière, le système 22 déduit la fonction d'atténuation de l'objet 24 en fonction du paramètre u.

La figure 4 représente schématiquement une variante de réalisation d'un dispositif pour la mise en oeuvre du procédé conforme à l'invention.

Dans cette variante, au lieu de tester successivement les différents spectres en énergie du faisceau de mesure, un faisceau de mesure à spectre fixe et large est utilisé. Les mesures d'intensité transmises par la pièce 18 ou par l'objet 24 sont effectuées grâce à un empilement 30 de détecteurs 30a, 30b,..., et jouant chacun le rôle de filtre passe haut pour les détecteurs suivants. C'est ainsi que chaque détecteur délivre un signal électrique correspondant à l'intensité pour une partie déterminée du spectre large en énergie.

On comprend donc que dans le dispositif de la figure 1, les objets à caractériser sont soumis à un faisceau de mesure présentant successivement des spectres en énergie différents de manière à balayer la gamme en énergie désirée, alors que dans le dispositif de la figure 4, les objets sont soumis à un faisceau de mesure à spectre large correspondant à la gamme en énergie désirée, ce spectre large étant ensuite filtré par les différents détecteurs.

Le dispositif de la figure 4 comprend un générateur 26 de faisceau de mesure qui peut être un générateur de rayons X ou γ. Ce générateur 26 est connecté à une commande 28 à potentiel fixe telle que le faisceau de mesure présente un spectre large en énergie. Par spectre large en énergie, on entend toute la gamme d'énergie que l'on désire tester, par exemple la gamme s'étendant de 10 keV à 500 keV pour les rayons X ou 0,5 MeV à 20 MeV pour les rayons γ.

Comme précédemment, le dispositif comprend une pièce 18 en forme de marches d'épaisseurs déterminées et réalisée en un matériau de référence. La pièce 18 peut défiler à volonté dans le faisceau ou bien être positionnée hors du trajet du faisceau grâce à un mouvement de translation non représenté.

Chaque détecteur 30a, 30b, ... de l'empilement 30 est connecté au système de commande et de traitement 22. Dans cette variante, les mesures d'intensités transmises pour chaque spectre découpé dans le spectre large par le filtrage dû aux détecteurs sont éffectuées simultanément. Le traitement réalisé par le système 22 pour obtenir la fonction d'atténuation est similaire à celui décrit précédemment.

Pour certaines applications, il peut être souhaitable d'obtenir la fonction d'atténuation non pas en fonction du paramètre u mais en fonction de l'énergie. Pour cela, il suffit lors d'une étape préliminaire effectuée une fois pour toute, de mesurer la fonction de transmission de l'épaisseur de référence du matériau de référence en fonction de l'énergie. Cette mesure peut être effectuée par tout moyen connu. En effet, cette mesure étant effectuée une fois pour toute, les contraintes de temps ou de difficultés de mise en oeuvre sont acceptables pour obtenir le plus grand nombre de points de mesure possible avec la meilleure précision possible.

En mesurant la transmission pour un grand nombre d'énergies différentes (par exemple, 10 énergies différentes comprises dans une gamme allant de 10 keV à 500 keV), la fonction de transmission de l'épaisseur de référence du matériau de référence peut être interpolée avec une précision de $10^{-4}$.

Lorsque la mesure de la fonction d'atténuation d'un objet est souhaitée en fonction de l'énergie, il faut donc enregistrer, dans une mémoire du système 22, la fonction de transmission u exprimée en fonction de l'énergie. Une fois la fonction d'atténuation déterminée en fonction du paramètre u, il suffit alors de remplacer u par son expression en fonction de l'énergie pour obtenir la fonction d'atténuation recherchée.

La description précédente se rapporte à la mesure d'une fonction d'atténuation d'un objet en un point de celui-ci. Pour obtenir la fonction d'atténuation en chaque point de l'objet, on peut par exemple utiliser un faisceau en éventail et une batterie de détecteurs (autant de détecteurs que de points souhaités) disposés le long d'une ligne perpendiculaire à la direction de propagation médiane du faisceau. Ce dispositif permet d'obtenir les fonctions d'atténuation selon une ligne, la translation de l'objet permet de faire des mesures selon des lignes successives.

## Revendications

1. Procédé pour déterminer la fonction d'atténuation d'un objet, caractérisé en ce qu'il comprend les étapes suivantes:

    A) Exprimer la fonction de transmission de l'objet comme un développement fini en puissances de la transmission u d'une épaisseur de référence d'un matériau de référence, chaque puissance de u étant affectée d'un coefficient, les puissances du développement étant égales à un rapport entre des épaisseurs préalablement déterminées du matériau de référence et l'épaisseur de référence;

    B) Déterminer les coefficients du développement:

        a) en mesurant l'intensité d'un faisceau de mesure pour différents spectres en énergie,

        b) pour chacun desdits spectres en énergie, en mesurant l'intensité du faisceau transmise par chacune des épaisseurs considérées de matériau de référence,

c) pour chacun desdits spectres en énergie, en mesurant l'intensité du faisceau transmise par l'objet,

d) pour chacun desdits spectres en énergie, en décomposant l'intensité du faisceau transmis par l'objet en une somme des intensités mesurées à l'étape B-b) relatives au spectre considéré, ces intensités étant affectées des coefficients recherchés;

e) en résolvant le système d'équations obtenu à l'étape B-d);

C) Déduire des étapes 1 et B, la fonction d'atténuation de l'objet exprimée en fonction de u.

2. Procédé selon la revendication 1 caractérisé en ce que lesdits spectres en énergie sont contenus dans une gamme allant de 10 à 500 KeV.

3. Procédé selon la revendication 1 caractérisé en ce que lesdits spectres en énergie sont contenus dans une gamme allant de 500 keV à 20 MeV.

4. Procédé selon la revendication 1 caractérisé en ce que lesdits spectres en énergie sont tels que les spectres successifs se recouvrent partiellement.

5. Procédé selon la revendication 1 caractérisé en ce que N+1, N entier $\geq$ 2, spectres en énergie sont utilisés, et en ce que N épaisseurs de matériau de référence sont soumises à ces spectres.

6. Procédé selon la revendication 5 caractérisé en ce que N est égal à 9.

7. Procédé selon la revendication 1 caractérisé en ce que les puissances du développement augmentées de 1/2 forment une suite géométrique de raison égale à une racine de trois, et la première puissance du développement étant égale à zéro.

8. Procédé selon la revendication 2 caractérisé en ce que le matériau de référence est choisi parmi les corps ayant un Z effectif compris entre 5 et 26.

9. Procédé selon la revendication 8 caractérisé en ce que le matériau de référence est du duralumin.

10. Procédé selon la revendication 8 caractérisé en ce que l'épaisseur de référence est comprise entre 1 mm et 5 mm.

11. Procédé selon la revendication 10 caractérisé en ce que l'épaisseur de référence est sensiblement égale à 4 mm.

12. Procédé selon la revendication 3 caractérisé en ce que le matériau de référence est choisi parmi les corps ayant un Z effectif compris entre 13 et 60.

13. Procédé selon la revendication 12 caractérisé en ce que le matériau de référence est de l'acier.

14. Procédé selon la revendication 12 caractérisé en ce que l'épaisseur de référence est comprise entre 0,5 et 2cm.

15. Procédé selon la revendication 14 caractérisé en ce que l'épaisseur de référence est sensiblement égale à 1 cm.

16. Procédé selon la revendication 1 caractérisé en ce qu'il comporte les étapes supplémentaires suivantes:

à l'aide de faisceaux quasi monochromatiques d'énergie et d'intensité connues, mesurer u en fonction de l'énergie,

en déduire les valeurs de la fonction d'atténuation de l'objet pour ces énergies.

17. Dispositif pour la mise en oeuvre du procédé de la revendication 1 caractérisé en ce qu'il comprend:

des moyens (10, 16) pour émettre un faisceau de mesure (14) possédant successivement N+1, N entier $\geq$ 2, spectres en énergie différents,

N échantillons en un matériau de référence et possédant des épaisseurs différentes, une de ces épaisseurs (18a) étant choisie comme épaisseur de référence, ces échantillons étant aptes à être placés à volonté sur le parcours du faisceau (14),

au moins un détecteur (20) apte à la mesure de l'intensité du faisceau (14) pour chaque spectre en énergie ainsi qu'à la mesure de l'intensité des faisceaux transmis par les échantillons et l'objet (24), soumis aux faisceaux de mesure,

pour chaque détecteur (20), des moyens de traitement (22) aptes à calculer, à partir de la mesure de l'intensité du faisceau pour chaque spectre en énergie ainsi que de la mesure de l'intensité du faisceau transmis par les échantillons et l'objet, la fonction de transmission de l'objet et à en déduire la fonction atténuation exprimée en fonction de la transmission de l'épaisseur de référence du matériau de référence.

18. Dispositif pour la mise en oeuvre du procédé de la revendication 1 caractérisé en ce qu'il comprend:

des moyens (26) pour émettre un faisceau de mesure à spectre large,

N, N étant un entier $\geq$ 2, échantillons en un matériau de référence et possédant des épaisseurs différentes, une (18a) de ces épaisseurs étant choisie comme épaisseur de référence, au moins un empilement de détecteurs (30), chaque détecteur (30 a, 30 b, ... ) étant sensible à une partie du spectre en énergie, l'empilement étant ordonné du détecteur sensible à la partie du spectre d'énergie la plus faible au détecteur sensible à la partie du spectre d'énergie la plus haute,

pour chaque empilement (30), connectés en sortie des détecteurs de l'empilement considéré, des moyens de traitement (22) aptes à calculer, à partir de la mesure de l'intensité des différents spectres du faisceau de mesure, de la mesure de l'intensité des spectres correspondant au faisceau de mesure transmis par les échantillons et l'objet, la fonction de transmission de l'objet et en déduire la fonction d'atténuation de l'objet exprimée en fonction de la transmission de l'épaisseur de référence du matériel de référence.

**Patentansprüche**

1. Verfahren zur Bestimmung der Extinktionsfunktion eines Objektes,
   **gekennzeichnet durch folgende Schritte**

   A) Ausdrücken der Transmissionsfunktion des Objektes als endliche Entwicklung in Potenzen der Transmission u einer Referenzdicke eines Referenzmaterials, wobei jede Potenz von u durch einen Koeffizienten beeinflußt ist, wobei die Potenzen der Entwicklung gleich dem Verhältnis zwischen den vorab bestimmten Dicken des Referenzmaterials und der Referenzdicke sind;
   B) Bestimmen der Koeffizienten der Entwicklung:

   a) durch Messen der Intensität eines Meßstrahls für unterschiedliche Energiespektren,
   b) durch Messen der Intensität des durch jede der berücksichtigten Dicken des Referenzmaterials durchgelassenen Strahls für jedes der Energiespektren,
   c) durch Messen der Intensität des durch das Objekt durchgelassenen Strahls für jedes der Energiespektren,
   d) durch Zerlegen der Intensität des durch das Objekt durchgelassenen Strahls für jedes der Energiespektren in eine Summe der bei Schritt B-b) mit Bezug auf das berücksichtigte Spektrum gemessenen Intensitäten, wobei die Intensitäten durch die gesuchten Koeffizienten beeinflußt sind;
   e) Auflösen des bei Schritt B-d) erhaltenen Gleichungssystems;

   C) Ermitteln der als Funktion von u ausgedrückten Extinktionsfunktion des Objektes aus den Schritten A und B.

2. Verfahren nach Anspruch 1,
   **dadurch gekennzeichnet, daß**
   die Energiespektren in einem Bereich von 10 bis 500 keV enthalten sind.

3. Verfahren nach Anspruch 1,
   **dadurch gekennzeichnet, daß**
   die Energiespektren in einem Bereich von 500 keV bis 20 MeV enthalten sind.

4. Verfahren nach Anspruch 1,
   **dadurch gekennzeichnet, daß**
   die Energiespektren derart sind, daß die aufeinanderfolgenden Spektren sich teilweise überlappen.

5. Verfahren nach Anspruch 1,
   **dadurch gekennzeichnet, daß**
   N+1 Energiespektren verwendet werden, wobei N ganzzahlig $\geq 2$ ist, und daß N Dicken des Referenzmaterials diesen Spektren ausgesetzt werden.

6. Verfahren nach Anspruch 5,
   **dadurch gekennzeichnet, daß**
   N gleich 9 ist.

7. Verfahren nach Anspruch 1,
   **dadurch gekennzeichnet, daß**
   die um 1/2 erhöhten Potenzen der Entwicklung eine geometrische Reihe bilden, mit einem Verhältnis gleich einer Wurzel aus 3, und die erste Potenz der Entwicklung gleich Null ist.

8. Verfahren nach Anspruch 2,
   **dadurch gekennzeichnet, daß**
   das Referenzmaterial aus Stoffen mit einem effektiven Z zwischen 5 und 26 ausgewählt wird.

9. Verfahren nach Anspruch 8,
   **dadurch gekennzeichnet, daß**
   es sich bei dem Referenzmaterial um Duraluminium handelt.

10. Verfahren nach Anspruch 8,
    **dadurch gekennzeichnet, daß**
    die Referenzdicke zwischen 1 mm und 5 mm liegt.

11. Verfahren nach Anspruch 10,
    **dadurch gekennzeichnet, daß**
    die Referenzdicke annähernd 4 mm beträgt.

**12.** Verfahren nach Anspruch 3,
**dadurch gekennzeichnet, daß**
das Referenzmaterial aus Stoffen mit einem effektiven Z zwischen 13 und 60 ausgewählt wird.

**13.** Verfahren nach Anspruch 12,
**dadurch gekennzeichnet, daß**
es sich bei dem Referenzmaterial um Stahl handelt.

**14.** Verfahren nach Anspruch 12,
**dadurch gekennzeichnet, daß**
die Referenzdicke zwischen 0,5 und 2 cm liegt.

**15.** Verfahren nach Anspruch 14,
**dadurch gekennzeichnet, daß**
die Referenzdicke annähernd 1 cm beträgt.

**16.** Verfahren nach Anspruch 1,
**dadurch gekennzeichnet, daß**

es zusätzlich folgende Schritte umfaßt:
Messen von u als Funktion der Energie unter Zuhilfenahme von energetisch quasi-monochromatischen Strahlen bekannter Intensität und Ermitteln der Werte der Extinktionsfunktion des Objektes für diese Energien daraus.

**17.** Gerät zur Durchführung des Verfahrens gemäß Patentanspruch 1,
**gekennzeichnet durch**

Einrichtungen (10, 16) zur Abgabe eines Meßstrahls (14) mit aufeinanderfolgenden N+1 Spektren unterschiedlicher Energien, wobei N ganzzahlig $\geq$ 2 ist,
N Proben eines Referenzmaterials mit unterschiedlichen Dicken, wobei eine der Dicken (18a) als Referenzdicke gewählt ist, und die Proben nach Belieben in den Strahlengang des Strahls (14) eingebracht werden,
zumindest einen Detektor (20) zur Messung der Intensität des Strahls (14) für jedes Energiespektrum wie auch zur Messung der Intensität der durch die dem Meßstrahl ausgesetzten Proben und das Objekt (24) durchgelassenen Strahlen, Verarbeitungseinrichtungen (22) für jeden Detektor (20) zur Berechnung der Transmissionsfunktion des Objektes ausgehend von der Messung der Intensität des Strahls für jedes Energiespektrum wie auch der Messung der durch die Proben und das Objekt durchgelassenen Strahlen, und Ermitteln der als Funktion der Transmission der Referenzdicke des Referenzmaterials ausgedrückten Extinktionsfunktion daraus.

**18.** Gerät zur Durchführung des Verfahrens gemäß Patentanspruch 1,

**gekennzeichnet durch**

Einrichtungen (26) zur Abgabe eines Meßstrahls (14) mit breitem Spektrum,
N Proben eines Referenzmaterials mit unterschiedlichen Dicken, wobei N ganzzahlig $\geq$ 2 ist, wobei eine (18a) der Dicken als Referenzdicke gewählt ist,
zumindest ein Satz von Detektoren (30), wobei jeder Detektor (30a, 30b, ...) auf einen Bereich des Energiespektrums anspricht, und der Satz von dem Detektor, der für das Spektrum mit der geringsten Energie anspricht, bis zu dem Detektor, der für das Spektrum mit der höchsten Energie anspricht, geordnet ist,
am Ausgang der Detektoren des jeweiligen Satzes angeschlossene Verarbeitungseinrichtungen (22) für jeden Satz (30) zur Berechnung der Transmissionsfunktion des Objektes, ausgehend von der Messung der Intensität der unterschiedlichen Spektren des Meßstrahls und der Messung der Intensität der dem Meßstrahl entsprechenden Spektren, die durch die Proben und das Objekt durchgelassen wurden, und Ermitteln der als Funktion der Transmission der Referenzdicke des Referenzmaterials ausgedrückten Extinktionsfunktion daraus.

**Claims**

**1.** A method for determining the attenuation function of an object, characterised in that it comprises the following steps:

A) expressing the transmission function of the object as a finite development in powers of the transmission u of a reference thickness of a reference material, each power of u being modified by a coefficient, the powers of the development being equal to a ratio between predetermined thicknesses of the reference material and the reference thickness;
B) determining the coefficients of the development:

a) by measuring the intensity of a measuring beam for different energy spectra,
b) for each of said energy spectra, by measuring the intensity of the beam transmitted by each of the thicknesses of reference material in question,
c) for each of said energy spectra, by measuring the intensity of the beam transmitted by the object,
d) for each of said energy spectra, by decomposing the intensity of the beam transmitted by the object into a sum of the intensities measured in step B-b) relative to the spectrum in question, these intensities being modified by the required coefficients;

e) by resolving the system of equations obtained in the step B-d);

C) deducing from steps 1 and B the attenuation function of the object expressed as a function of u.

2. A method according to Claim 1, characterised in that said energy spectra are contained in a range from 10 to 500 KeV.

3. A method according to Claim 1, characterised in that said energy spectra are contained in a range from 500 KeV to 20 MeV.

4. A method according to Claim 1, characterised in that said energy spectra are such that the successive spectra partly overlap each other.

5. A method according to Claim 1, characterised in that N+1, N being an integer $\geq 2$, energy spectra are used, and in that N thicknesses of reference material are subjected to these spectra.

6. A method according to Claim 5, characterised in that N is equal to 9.

7. A method according to Claim 1, characterised in that the powers of the development when increased by 1/2 form a geometric progression of ratio equal to a root of three, and the first power of the development being equal to zero.

8. A method according to Claim 2, characterised in that the reference material is selected from among the bodies having an effective Z of between 5 and 26.

9. A method according to Claim 8, characterised in that the reference material is duralumin.

10. A method according to Claim 8, characterised in that the reference thickness is between 1 mm and 5 mm.

11. A method according to Claim 10, characterised in that the reference thickness is substantially equal to 4 mm.

12. A method according to Claim 3, characterised in that the reference material is selected from among the bodies having an effective Z of between 13 and 60.

13. A method according to Claim 12, characterised in that the reference material is steel.

14. A method according to Claim 12, characterised in that the reference thickness is between 0.5 and 2 cm.

15. A method according to Claim 14, characterised in that the reference thickness is substantially equal to 1 cm.

16. A method according to Claim 1, characterised in that it comprises the following additional steps:

with the aid of virtually monochromatic beams of known energy and intensity, measuring u as a function of the energy, deducing therefrom the values of the attenuation function of the object for these energies.

17. A device for implementing the process of Claim 1, characterised in that it comprises:

means (10, 16) for emitting a measuring beam (14) having in succession N+1, N being an integer $\geq 2$, different energy spectra, N samples in a reference material, having different thicknesses, one of these thicknesses (18a) being selected as the reference thickness, these samples being suitable to be placed at will on the path of the beam (14), at least one detector (20) suitable for measuring the intensity of the beam (14) for each energy spectrum and also for measuring the intensity of the beams transmitted by the samples and the object (24), subjected to the measuring beams, for each detector (20), processing means (22) suitable for calculating, from the measurement of the intensity of the beam for each energy spectrum and from the measurement of the intensity of the beam transmitted by the samples and the object, the transmission function of the object and for deducing therefrom the attenuation function expressed as a function of the transmission of the reference thickness of the reference material.

18. A device for implementing the process of Claim 1, characterised in that it comprises:

means (26) for emitting a wide-spectrum measuring beam, N, N being an integer $\geq 2$, samples in a reference material, having different thicknesses, one (18a) of these thicknesses being selected as reference thickness, at least one stack of detectors (30), each detector (30a, 30b, ...) being sensitive to part of the energy spectrum, the stack being ordered from the detector sensitive to the weakest part of the energy spectrum to the detector sensitive to the highest part of the energy spectrum, for each stack (30), connected to the output of the detectors of the stack in question, processing means (22) suitable for calculating, starting from the measurement of the intensity of the different spectra of the measuring beam, from the measurement of the intensity of the spectra corresponding to the measuring beam transmitted by the samples and the object, the transmission function of the object and deducing therefrom the attenuation function of the object, expressed as a function of the transmission of the reference thickness of the reference material.

*FIG.1*

*FIG.2*

*18a*

*FIG.3*

*18*

*18*

*26*

*24*

*30*

*30a*

*30b*

*18a*

*28*

*22*

*FIG.4*